# EUROPEAN PATENT APPLICATION

(11) **EP 2 098 900 A1**
(43) Date of publication of application: **09.09.2009**
(21) Application number: 08152297.1
(22) Date of filing: 05.03.2008
(51) Int. Cl.: G02B 21/00, G02B 21/26

(54) **Scanner arrangement and method for optically scanning an object**

(71) Applicant: Westfälische Wilhelms-Universität Münster, 48149 Münster (DE)
(72) Inventor: FREKERS, Dieter, 48341, Altenberge (DE); AKSIT, Ishak, 48159, Münster (DE)
(74) Representative: Viering, Jentschura & Partner

(57) **Abstract**

A scanner arrangement for optically scanning an object in a sequence of scanning steps with a driveable object stage and a front objective lens on a carriage moveable parallel to the object stage. The object stage is drivable during the sequence of scanning steps in order to achieve a continuous movement and the objective lens carriage with the front objective lens can be driven forwards in at least one of the scanning steps with a speed which is not equal to the speed of the object stage for a substantial period of time relative to the length of time taken for the at least one scanning step to be performed. The result is that the relative motion of the front objective lens and the object stage during the at least one scanning step allows acquisition of an unblurred image and this corrects for increased magnification and lens aberration.

## Description

The invention relates to a scanner arrangement and a method for optically scanning an object.

In the fields of medicine, biophysics, biology, pharmacology, material control and image archiving of histological preparations, optical scanning microscopes are required which have a high throughput (that is to say they can optically acquire a large number of objects in a short period of time) and can acquire, in the form of an image, large areas, for example of the order of magnitude of up to 20 cm x 20 cm, with a typical image resolution of approximately 1 µm. The intention is further to create depth profiles of the object to be optically scanned for specific applications.

A scanning microscope of this type is usually equipped with an image-producing scanner camera, a detector, whose pixels are produced in the form of an integrated circuit (chip) in, for example, CMOS technology. The scanner camera is arranged on the image plane of the microscope. An objective lens system in the microscope permits different magnifications of object images on the object plane which are typical for microscopy, for example 10-fold, 20-fold, 40-fold, 50-fold, 60-fold, 100-fold, etc. Magnifications of 20-, 40- and 60-fold find particularly advantageous use in medical fields, in particular when used to view cellular structures.

In order to optically scan an object, a mechanical translation stage moves horizontally under computer control, the two basic directions of this horizontal movement usually being referred to as "x-direction" and as "y-direction". The movement in the "z-direction", that is to say the vertical movement and hence the focussing of the microscope, is ensured by means of a computer-controlled linear guidance of the objective lens system. Depending on the magnification and the specifications of the objective lens system, a typical field of view, FOV, of a microscope of this type has a size of approximately 200 µm x 200 µm and is imaged on the image plane on the photosensitive image-recording chip (e.g. CMOS chip) of the scanner camera. However, as is known in the art the FOV can vary and can for example be of the order of 800 µm x 800 µm in the case of low magnification, say 10-fold. Nowadays a colour camera having a resolution of more than from 1 Mpixel is used as a scanner camera.

For an area of 10 cm x 10 cm to be optically scanned, the scanner camera thus produces about 250,000 individual images. This number potentially still needs to be multiplied by the number of the depth profile images. Traditionally, the individual images of each plane, were recorded in a step-by-step fashion, located one next to the other, and were combined by "software stitching" to form one or more total images. The total images can subsequently be analyzed automatically under computer control and depending on the application.

Electronic acquisition of such large amounts of data and the simultaneous image processing and image storing in real time is largely unproblematic and currently achieved at approximately 10-100 frames per second (fps) at full image size. Future developments will probably be able to increase this value again by a factor of 10. If an image processing rate of 100 fps is taken as a basis, a complete microscopic image acquisition of the area in the abovementioned example of 100 cm² is possible electronically in approximately 40 minutes, or alternatively 10 cm² in 4 minutes or 1 cm² in 24 seconds. If the intention is for only parts of the area to be acquired microscopically (e.g. an arrangement of object slides or a sample matrix), this number is correspondingly lower.

The mechanical realization of the movement operations traditionally posed a serious and largely unresolved problem, since, in order to record an image, the object always had to be brought into a rest position. The mechanics of a mechanical translation stage are not able to carry out such a high number of starting operations (accelerations) and stopping operations (decelerations), in accordance with the above-described example of 100 starting/stopping operations per second, with simultaneously low travel, which would be of the order of 200 µm.

Instability of the mechanical system of the scanning microscope occurs additionally on account of inevitable considerable mechanical oscillations which are caused by the starting/stopping operations which occur at short intervals. The number of starting/stopping operations in continuous operation is therefore realistically typically limited to about 1-5 per second. Necessary longer displacement distances, such as, for example, when relocating specific positions, when moving toward object slides or in the case of multiple samples, are largely irrelevant in terms of the time balance of a scanning operation.

This problem was solved in WO 2006/024279 by the introduction of an improved scanning arrangement, for example for use in a scanning microscope, and a method for optically scanning an object, in which arrangement and method an object having an area to be optically scanned of the order of magnitude of 100 cm² could be simply optically scanned at an image processing rate of 100 fps and more while avoiding the mechanical oscillations known from the prior art.

Such a scanner arrangement included a scanning microscope with a moveable front objective lens and moveable stage, the front objective lens arranged to move, in a series of steps, parallel to the moving stage and at the same speed as the moving stage so that a series of images of the moving stage could be acquired without the moving stage having to undergo the normal start and stop operations. However, it has been found that this arrangement did not always lead to the acquisition of an unblurred image.

This problem is solved according to the invention in which a scanner arrangement, in particular a scanning microscope, for optically scanning an object in a sequence of scanning steps, has a driveable moving object stage and an objective assembly, has a front objective lens on an objective lens carriage which can be moved parallel to the object stage by a carriage drive, and wherein the object stage can be driven during the sequence of scanning steps in order to achieve a continuous movement and in which the objective lens carriage with the front objective lens can be driven in each of the scanning steps for a forward movement step, in which the front objective lens is moved with the object stage out of an initial position, and in each case between successive scanning steps for a backward movement into the initial position, with the object being able to be optically scanned during the continuous movement of the object stage and in which there is at least one scanning step in which the speed of the front objective lens is arranged to be unequal to the speed of the object stage for a substantial period of time relative to the length of time taken for the at least one scanning step to be performed so that the relative motion of the front objective lens and the object stage during the at least one scanning step allows acquisition of an unblurred image.

In a method, according to the invention, for optically scanning an object in a sequence of scanning steps by means of a scanner arrangement, in particular a scanning microscope, having an objective assembly with a front objective lens, the scanning steps are carried out during the continuous movement of the object by virtue of the fact that the front objective lens of the objective assembly is moved in parallel with and in the same direction as the object out of an initial position during each of the scanning steps and is moved back into the initial position between the respective scanning steps wherein there is at least one scanning step in which the speed of the front objective lens is not equal to the speed of the object for a substantial period of time relative to the length of time taken for the at least one scanning step to be performed so that the relative motion of the front objective lens and the object during the at least one scanning step allows acquisition of an unblurred image.

It is found that by varying the motion of the front objective lens relative to the motion of the object stage an unblurred image can be acquired. It has been found that an unblurred image is not always acquired if the front objective lens and the object stage are moved at precisely the same speed and in the same direction as each other and in particular the optical magnification produced by the lens assembly hinders acquisition of an unblurred image. It has been found that for magnifications over 10-fold the velocity of the front objective lens may be 2 or 3 times the velocity of the moving stage in order for an unblurred image to be formed. The specific difference in speed between the front objective lens and moving stage, both moving parallel to each other, can be identified by the skilled person once he realises that he must look for the velocity profile of the front objective lens which allows acquisition of an unblurred image. It is not always the case, however, that a constant velocity is sufficient for the front objective lens. In particular it is found that aberrations within individual lens used in the microscope system, plus unlinearities elsewhere in the overall system, may require the velocity profile of the front objective lens to include compensating accelerations. The invention therefore allows the efficient acquisition of an image of an object by arranging the sequential imaging of portions of the object while the object is in motion. It is usual, but not necessary, that every scanning step include the full set of features of the invention. The person skilled in the art, once he realises that the optical properties of his own lens system may cause aberrations or artefacts in the acquired image will, without difficulty and undue experimentation, be able to work out what characteristics are required for the velocity of the front objective lens in order for it to track the object on the continuously moving stage in order to keep the image in the microscope. When this velocity with correct characteristics is applied to the front objective lens, it is found that the optical coupling between the moving object and the moving front objective lens allows the formation of an unblurred image. By characteristics is meant which values of velocity at which times, or over which time periods during the scanning step.

The relevant motions or movements of the object stage and of the front objective lens while tracking the object on the object stage is, in both cases, in the XY plane and although it is usual for the scanning steps to be of equal length to each other, it is possible that their lengths could be unequal.

Since the front objective lens moves back into its initial position between two successive scanning steps, the front objective lens thus always starts each successive scanning step in the same place.

The drive of the object stage, the carriage drive and also the trigger mechanism of the scanner camera are driven by means of a suitable control means, for example by means of a control computer, which controls the interplay of the forward movement of the object by means of the object stage, the forward and backward movement of the front objective lens on the objective lens carriage by means of the carriage drive and the image recording by the scanner camera by means of the trigger mechanism.

An advantage of the invention can be seen in the fact that, by means of the movement of the front objective lens of the objective assembly relative to the object during each of the scanning steps, both the high number of starting/stopping operations of the object stage (usually a mechanical translation stage) known from the prior art is avoided while also the acquisition of an unblurred image is achieved. This leads, according to the invention, to a considerable improvement in the stability of the entire scanner arrangement as compared to the prior art, which makes possible a considerably higher image recording frequency.

Another advantage of the invention is that the motor used to drive the object stage shows significantly less wear as compared to the prior art on account of the considerably reduced starting/stopping operations. Thus the service life of the object stage and, in this respect, consequently also of the entire scanner arrangement is increased according to the invention. In addition, a simple and hence low-cost linear motor which moves, according to the invention, at constant speed suffices as the drive for the object stage.

Yet another advantage of the invention can be seen in that the time required for optically scanning the object is shorter than in traditional microscopic scanning systems utilising mechanical stages which start and stop between each scanning step. In particular, the image recording rate can be increased by a factor of 30 to 100 as compared to the prior art.

Yet another advantage of the invention can be seen in that the system allows the acquisition, through each scanning step, of a set of clear, sharp, unblurred, that is to say non-blurred, images. An additional advantage, associated with the fact that the continuous motion of the stage reduces the number of start and stop operations is that noise within the system is reduced.

The carriage drive preferably has a forward movement device with a piezoelement. Other options are available, for example a magnetic drive could be used, but this would necessitate the use of relatively heavy coils. A mechanical gearing system could be used, but this might introduce jitter into the system. A piezoelement has been found to be capable of producing precise, linear motion with little interference. The forward movement device is used in this context to translate the front objective lens on the objective lens carriage parallel to and in the same direction as, the object out of its initial position into an end position during the scanning operations. The piezoelement preferably has a maximum travel in the range between 100 µm and 1 mm and in particular of 500 µm. In particular, where the scanner arrangement has a lens system with an optical axis, which lens system optically couples the front objective lens to the detector, the maximum travel of the front objective lens in forward travel generally displaces it to no more than 300 µm, depending on the magnification used, and preferably no more than 250 µm, from the optical axis of the lens system. The piezoelement can also preferably be operated at a frequency in the range of between 10 Hz and 200 Hz, in particular at a frequency of 100 Hz. The control for the piezoelement can allow the piezoelement to translate the front objective lens at the same speed as the object stage, but for the purposes of the invention will drive it at a different speed for at least one period of time. This can be achieved by applying a voltage to the piezoelement by some arrangement which allows ramping up, or down, of the voltage. By this mechanism a variable voltage can be applied to the piezoelement, by known methods, thus providing the possibility of a variation in speed of the front objective lens.

The carriage drive preferably has a backward movement device with a permanent magnet. The backward movement device is used in this context to translate the front objective lens on the objective lens carriage out of its end position into its initial position between the scanning steps. In particular, two permanent magnets are used as a preferred development for the backward movement device. For this purpose, one permanent magnet is fitted on the objective lens carriage of the objective assembly and the second permanent magnet is fitted on a separate holder of the scanner arrangement, with both permanent magnets repelling each other on account of the arrangement of their magnetic poles and of the magnetic force produced thereby.

As soon as a voltage is present at the piezoelement of the forward movement device, the piezoelement translates the objective lens carriage and hence the front objective lens from its initial position in the direction opposite the magnetic force emanating from the two permanent magnets of the backward movement device. The front objective lens which is fitted on the objective lens carriage is again translated into its initial position on account of the magnetic force when the effect of the voltage supply is being removed from the piezoelement. The piezoelement is normally controlled by an applied voltage and can be ramped up in any arbitrary way, allowing total control of the movement of the front objective lens. Generally, at the start and stop of the motion there is a natural period of acceleration or deceleration as the front objective lens is propelled into motion and then eventually stopped, but in-between these two periods is a substantial period of time relative to the length of time of the scanning step in which any desired velocity profile may be applied to the piezoelement. This velocity profile may comprise essentially a constant speed of motion of the front objective lens, but may also comprise further accelerations to accommodate, for example, aberrations in the lens system.

In a preferred development of the invention, the front objective lens has a lens viewing area on the object and the objective assembly has an objective viewing area on the object. The lens viewing area is preferably larger than the objective viewing area. The respective viewing area on the object results here from the field of view of the respective optical component(s). In particular, the diameter of the front objective lens is larger than the diameter of the objective field of view at the location of the front objective lens. At the same time, the deviation of the front objective lens from the optical axis of the objective assembly during the forward movement step is still so small that no visible additional imaging errors, for example optical aberrations, occur in the image plane on the image recording chip of the scanner camera once an unblurred image is acquired using the scanner arrangement of the invention.

In another preferred development of the scanner arrangement according to the invention, the latter has an additional piezoelement which is fitted on the objective assembly such that the objective assembly can be adjusted along the direction of the optical axis such that the focus of the objective assembly can be set. On account of this, a depth profile of the object can be recorded. This setting of the focus can, for example, take place during the movement of the front objective lens with the object from the initial position into the end position of the front objective lens.

The scanner camera preferably has an image recording chip which is presently produced using CMOS technology, for example.

The scanner arrangement used as scanning microscope is intended especially for use in the fields of image archiving, biology, biophysics, pharmacology, material control and medicine of histological preparations but can also be used in all fields in which traditional optical microscopy is used.

In particular, the invention can be explained using the following model. Firstly, the region to be scanned is definable on the object in an arbitrary (Xₐ, Yₐ) coordinate reference frame.

An addressable coordinate system can be defined which describes the microscope stage in such a way that a transformation can be performed of the said coordinates, (xₐ, yₐ) into the addressable coordinate system of the microscope stage (X, Y). Generally, the transformation would be an affine transformation.

The object on the microscope stage is displaceable in accordance with this addressable coordinate system in 2 dimensions, (X, Y). Further however, the stage would normally allow an independent motion with an addressable further coordinate Z, allowing movement in the Z direction for the purposes of varying the focal plane of the lens system. In effect, the fully defined coordinate system is described by a 3-dimensional spatial coordinate system (X, Y, Z) as a reference frame for acquiring a microscope image of the object. Similarly, there is a separate Z'-motion allowed to the front objective lens, for the purpose of bringing different depths of the object in focus.

The object is scanned using the invention and a digitised image of the complete object or portions thereof is stored keeping the spatial coordinates (x, y, z) as a reference, whereby (x, y, z) are the coordinates of the object determined by the affine transformation.

A third coordinate system, (X', Y'), can be defined to describe the movement of the front objective lens. As explained, the scanning of the object is achieved, according to the invention, by continuously displacing the (X, Y) coordinates relative to the front objective lens at a velocity V, and simultaneously acquiring images while the stage is in continuous motion, using the front objective lens with movable coordinate system (X', Y') and which moves with some velocity profile {V'} or at some instantaneous velocity V' during the forward motion in each scanning step. The two coordinate systems, (X, Y) and (X', Y') are in general decoupled from each other as a result of the optics of the microscope and in this case V and V' are different in order to acquire an unblurred image in each scanning step. The result, following all the necessary scanning steps needed to cover the defined region of interest, is a complete scan of the region of interest at the microscope resolution which bypasses the methods of the prior art which use step-wise incremental stage movement but which include scanning of an object on a stationary microscope stage between each movement step. The method of the invention thereby avoids adverse, and sometimes even excessive, inertial forces acting on the microscope object during the prior art start-stop sequences while allowing acquisition of an unblurred image.

The result of using the invention is the construction of a data structure representing a microscope object, the structure using digitised data from parts of or from a complete specimen on a microscope slide or from any other object placed under the objective lens of a microscope for the purpose of a complete scanning at high, usually pre-defined magnifications in transparent, fluorescent or reflective mode. The acquired and fully digitised image can be stored.

Usually, under laboratory scanning procedures, the scanning steps will be arranged so that the acquired images are contiguous with no substantial spacing or overlap. This avoids use of a seaming algorithm, and further, allows a view of the full image on an appropriate screen at any resolution in an un-tiled fashion.

The method of using this technique for microscope scanning and image acquisition is therefore distinctly different from any other method that employs a technique by which the stage must stop under the objective lens for un-blurred image acquisition. Adverse acceleration forces acting on the object, or on the stage as a whole, and excess noise levels as a result of this, are avoided and, in addition, acquisition speed is not limited by the mechanics of the system.

Typical excursions of the objective lens from the optical centre are of the order of 10µm-500µm depending on magnification and lens characteristics. After successful image acquisition, the lens is retracted to its centre position, at which point a new sequence of image data taking can commence. The lens motion is controlled through an actuator, which in this case is realised by applying a voltage to a piezo crystal, to which the lens is attached. The actuator / piezo crystal acts against a unipolar magnetic field supplied by two permanent high-field mini-NIB-magnets, which pushes the lens back to its nominal centre position once the actuator / piezo crystal is relaxed. The advantage of using magnets to return the actuator, instead of other electronic or mechanical means, is that such a system operates in an essentially frictionless manner and is thereby noiseless.

Further, the invention can be used in the following manner. The field of view FOV of the lens is typically larger than the size of the image that is being acquired. Typically, the lens FOV is a circle and the sensor is a square or rectangle, which can be larger or smaller than the FOV of the lens. The skilled person will know that there are 3 different areas, the lens FOV magnified to the image plane, the sensor area and the size of the image acquired in the image plane, the latter being always smaller or equal the size of the sensor. Ultimately a method of scanning utilising scanning steps is used to acquire rectangular shaped images which one can then easily tile together. In a typical example the FOV of the lens is 1100 um, circular shaped. The image in the image plane extends the size of the sensor (the latter being 0.8 x 0.7 cm, typical pixel size about 6.7 x 6.7 um), which means the sensor is smaller than the image circle (i.e. lens FOV x magnification). Typically, scanning might be required which uses a tile size of 425 µm x 340 µm, which means in each scanning step the stage moves 425 µm in one direction. If this distance is moved within 30 msec, then we consume some initial overhead time, of the order of 3 -5 msec in order to ensure that the lens carriage moves at constant velocity. During this time the trigger is prepared and everything in set in order electronically. The image is then acquired over approximately 1 msec exposure time using an LED, or light emitting diode, which is driven in over-current mode during this time. Subsequent data transfer takes about 20 msec. There is then a period of time of the order of 5 msec in which the lens carriage snaps back to its original position, waits until the 300 µm of displacement are over and starts all over again. The snap back can be undertaken much faster than 5 msec depending on how the return mechanism is arranged to operate. If the lens carriage and piezoelement construction and the object stage are the only parts that move, so that no other adverse acceleration forces generate any movement, then no seaming algorithm is needed to join the acquired images. Under these circumstances all acquired images fit well together, provided, of course, that everything is correctly synchronized. In this example it is possible to acquire 33.3 images per second, in which case it is possible to image an area of (425 µm x 340 µm) x 33.3 = 4.8 sqmm/sec at a stage velocity of 1.4 cm/sec. If the area were 850 µm x 680 µm for each scanning step, in which case the diagonal now touches the outer periphery of the FOV, the total area scanned per second would be a factor of 4 larger (19.2 sq-mm/sec = 11.5 sq-cm /minute) at a velocity of 2.8 cm /sec. Both situations could be accomplished with the same lens and sensor. The image area can be chosen at will. For larger image areas the entire system would have to move faster, the ratio of lens carriage velocity to stage velocity would, however, be the same.

Further, the velocity V' of the co-moving coordinate system should, as a result of the optical properties of the specific microscope used, not be identical to the velocity V of the stage, yet, it is synchronised, or related, to the stage motion in such a way as to keep the image plane of the microscope stationary. This is easy for the skilled person to achieve once he realises he will have to experiment to find the particular velocity profile for the front objective lens which allows acquisition of an unblurred image, depending on the specific optical properties of the microscope used.

The velocity profile or the voltage profile for the piezoelement is stored, for example in a database of the computer control, and does not need to be redefined during the scanning process if the objective lens properties do not change. If, however, another lens is substituted, for example to change magnification, then a new velocity profile must be worked out or retrieved from storage.

An exemplary embodiment of the invention is illustrated schematically in the figures and is explained in more detail below. In this case, identical reference symbols designate identical components.

In the figures

Figure 1 shows a schematic illustration of the principle of image recording in accordance with an exemplary embodiment of the invention;

Figure 2 shows a cross sectional view of a scanner arrangement in accordance with the exemplary embodiment of the invention;

Figure 3 shows a perspective exploded view of the scanner arrangement in accordance with the exemplary embodiment of the invention;

Figure 4 shows a side view of the scanner arrangement in accordance with the exemplary embodiment of the invention; and

Figure 5 shows a graphic representation of an object, which was composed of a plurality of images recorded by means of the scanner arrangement in accordance with the exemplary embodiment of the invention.

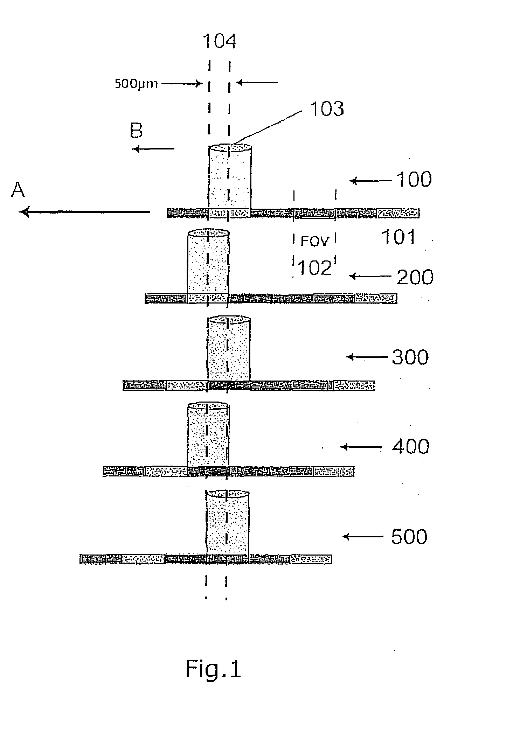

Fig. 1 shows a schematic illustration of the principle of image recording in accordance with an exemplary embodiment of the invention.

Reference symbol 100 is used to illustrate an object 101 to be scanned in a first position, which object moves continuously at constant speed in the direction of the arrow A. The object 101 has a plurality of identical lens viewing areas 102 which are to be recorded in a step-by-step fashion one after another by means of a scanner camera (not illustrated) through an objective assembly. Here, the cross sectional area of the lens viewing areas 102 on the object 101 corresponds to the cross section of the field of view of a front objective lens 103 on the object 101. The front objective lens 103 is part of the objective assembly and in this exemplary embodiment has an individual lens with a diameter of about 5 mm. The scanner camera has a camera field of view whose cross section on the object 101 is designated as camera viewing area 104 whose size depends on the objective. The lens viewing area 102 (FoV) of the front objective lens 103 is illustrated, in position 100, flush on the left with the camera viewing area 104.

During the recording of an image of the object 101 by means of the scanner camera, that is to say during a scanning step, the front objective lens 103 is also moved in addition to the moving object 101. The front objective lens 103 is moved, in accordance with the exemplary embodiment, by means of a piezocrystal, which can translate the front objective lens 103 by up to 500 µm, and is indicated by the arrow B. In this case, the front objective lens 103 is moved by the same distance and in the same direction as the object 101, and the movement of the front objective lens 103 is matched to the movement of the object 101 so that an unblurred image is acquired. This matching of the movement of the front objective lens 103 to the movement of the object 101 takes place by means of a suitable control means, for example a control computer. As can be seen, due to the movement of the front objective lens 103 with respect to the object 101 during the scanning step, the scanner camera records a "standing image". This relative motion between the front objective lens and the object compensates for the individual optical properties of the lenses used in their lens arrangement. At the end of the respective scanning step, the front objective lens 103 is in the end position (designated by reference symbol 200) in which the lens viewing area 102 of the front objective lens 103 is illustrated flush on the right with the camera viewing area 104. Before the subsequent scanning step starts, only the front objective lens 103 is now moved back again into its initial position, whereas the object 101 continues to move in the direction of the arrow A. The front objective lens 103 is moved back, in accordance with the exemplary embodiment, by means of suitable fitted permanent magnets (details in this respect are described in the following figures). The front objective lens 103 which is moved back is illustrated in position 300. Position 300 is the same as position 100 except for the object 101 which is translated in the direction of arrow A by one lens viewing area 102 (FoV).

During the next scanning step, both the object 101 and the front objective lens 103 are now translated again in the direction of arrow A or B, respectively. At the end of the next scanning step, the object 101 and the front objective lens 103 are in position 400, which is the same as position 200 except for the object 101 which is translated in the direction of arrow A by one lens viewing area 102. The front objective lens 103 is then moved back again into its initial position, after which the system is in the position designated by the reference symbol 500. Position 500 is the same as position 100 except for the object 101 which is translated in the direction of arrow A by two lens viewing areas 102.

A scanner arrangement 50 in accordance with the exemplary embodiment of the invention provided as scanning microscope is now described in detail.

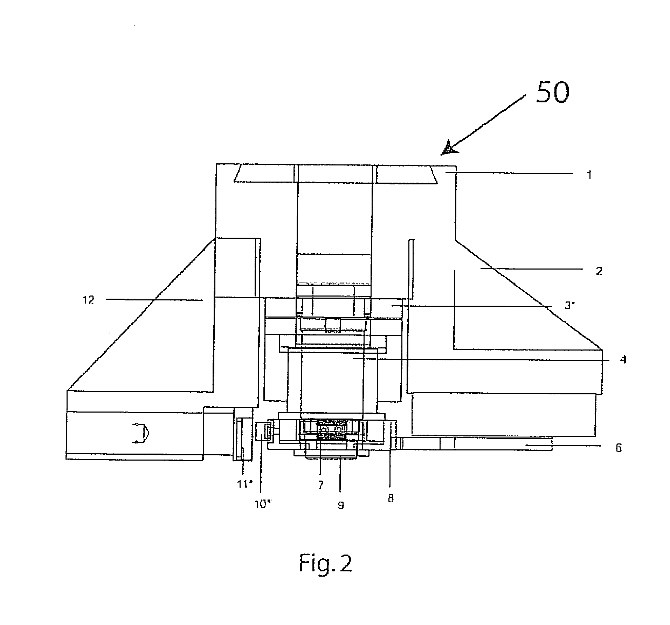

Fig. 2 represents a cross sectional view of the scanner arrangement 50.

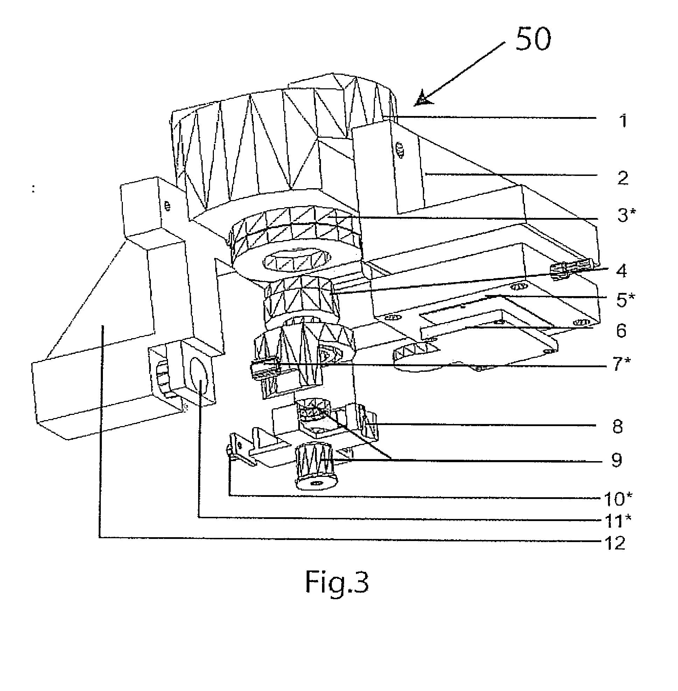

The scanner arrangement 50 has a holder 1 at whose upper end a conventional scanner camera (not illustrated and not described in further detail) is fitted. The scanner camera is fixed in place and therefore remains at a standstill when an object is optically scanned, that is to say the object moves past the scanner camera on which the image of the object is stationary. A piezoactuated objective holder 3 is fitted on the center of the holder 1 below the scanner camera, to whose bottom side an objective assembly 4, 7-10 (in Fig. 3) is attached. The piezoactuated objective holder 3 is used to set the exact focal plane of the objective assembly 4, 7-10 (in Fig. 3), that is to say to adjust the position of the objective assembly 4, 7-10 (in Fig. 3) along the optical axis of the objective assembly 4, 7-10 (in Fig. 3) relative to the scanner camera. In accordance with this exemplary embodiment, the piezoactuated objective holder 3 used is the model Pifoc P-725.4CD.

The objective assembly 4, 7-10 (cf. Fig. 3) has an objective upper part 4, attached to the piezoactuated objective holder 3 and fixed in place just like the scanner camera, and a translatable objective lower part 7-10 (in Fig. 3). The objective upper part 4 has, in accordance with the exemplary embodiment, a scattered light protective diaphragm which can be screwed in, two minirail milled indentations for attachment purposes and a locking ring. In addition, the objective upper part 4 is optically coupled to the scanner camera. The objective lower part 7-10 has minirail guides 7 (cf. Fig. 3) which are in engagement with the two minirail milled indentations for attachment purposes, twice the model MDN-05-10-05 in accordance with the exemplary embodiment, has an objective lens carriage 8, which is also referred to as lens guiding plate and has a screw-in thread for a front lens holder, a permanent magnet holder and a Teflon-coated sliding contact bearing for a pressure plate 6, has a front lens holder 9, which can be screwed in, with front lens cover screw and has a permanent magnet 10 which is integrated in the permanent magnet holder on the objective lens carriage 8.

In each case one attachment bracket 2, 12 is fitted on the holder 1 to the left and right of the objective assembly 4, 7-10 (cf. Fig. 3). A translation stage 5 driven by means of a piezoelement, a Hera Piezo stage model P-625.1CD in accordance with the exemplary embodiment, and, beneath it, a pressure plate 6 are fitted to the bottom side of the right-hand attachment bracket 2. The pressure plate 6 is translated, by means of the translation stage 5, in the direction of the left-hand attachment bracket 12 parallel to the movement direction of the object which is to be optically scanned and was translated by means of an object stage. Since the pressure plate 6 abuts the objective lens carriage 8, the objective lens carriage 8 is simultaneously moved in the same direction when the pressure plate 6 is moved. This movement is correspondingly supported by the minirail guides 7 (cf. Fig. 3).

On the bottom side of the left-hand attachment bracket 12, an adjustable guide is fitted, to which, in turn, a permanent magnet 11 is attached. The adjustable guide is used for the accurate positioning of the permanent magnet 11, which can also be referred to as permanent magnetic stamp, with respect to the permanent magnet 10 on the objective lens carriage 8. It is important here to ensure the correct arrangement of the poles of the two permanent magnets 10 and 11: since the pressure plate 6 translates the objective lens carriage 8 in the direction toward the left-hand attachment bracket 12 on account of the translation stage 5 which is driven by means of the piezoelement (more accurately: piezoelectric element) if a voltage is present in the associated piezocrystal, the two permanent magnets 10, 11 must be mounted such that they magnetically repel each other in order to move back the objective lens carriage 8 into the initial position when the piezocrystal is without voltage.

The scanner arrangement 50, which the inventors named the AMBIS system (Anti Motion-Blurring Imaging Scanning System), permits the complete circumvention of the mechanical starting/stopping operations in a microscope system known from the prior art. This is ensured by the use of a piezoelectric element with long travel. A piezoelectric element of this type now only moves the objective lower part 7-10 weighing only a few grams with the front objective lens and the objective lens carriage 8. The object stage can be moved away in the y-direction, that is in the direction of the left-hand attachment bracket 12 viewed from the right-hand attachment bracket 2, at constant speed underneath the front objective lens. The piezoelement compensates for the movement of the object stage in a manner such that it moves the objective lower part 7-10 synchronously with the front objective lens and the objective lens carriage 8 in the same direction and as the object such that, for the time of the recording of a partial image of the object, that is to say during a scanning step, a "standing image" is produced for the scanner camera.

If an image recording rate of 100 fps and also a field of view of 200 µm x 200 µm on the object are used as a basis in this exemplary embodiment, all scanning steps can be joined seamlessly when the object stage moves at a speed of 2 cm/s.

The piezoelement used for the horizontal translation of the objective lower part 7-10 in this exemplary embodiment is specified at a maximum travel of 500 µm and can be operated at typically a frequency of 100 Hz. Once the desired travel, which, depending on the respective application, corresponds to the width of a lens viewing area on the object, is reached, the objective lower part 7-10 with the front objective lens and the objective lens carriage 8 is moved back into the original position by switching off the piezo-voltage and assisted by the magnetic fields, having the same polarity, of the two permanent magnets 10, 11. This guiding-back process takes less than 5 ms.

The movement of the piezocrystal of the translation stage 5 is coupled to the movement of the y-axis of the object stage via an electronic feedback system. Over a displacement area of 500 µm (or over a period of 25 ms using the above speed value of 2 cm/s), the impression of a "standing image" is thus created. This time is significantly longer than the electronic trigger opening time of the scanner camera. During the movement operation, the deviation of the front objective lens from the optical axis of the scanner arrangement 50 of the scanning microscope is still so small that no visible additional imaging errors due to aberrations occur on the image plane on the scanner camera.

The abovementioned electronic feedback system controls not only the movement of the piezocrystal of the translation stage 5, but also the trigger opening of the scanner camera as a function of the movement of the y-axis of the object stage. A commercially available control computer can be used as electronic feedback system.

The movement of the entire objective lower part 7-10 in the z-direction (that is to say along the optical axis of the objective assembly 4, 7-10 or perpendicular to the translational plane of the object) can be actuated in the same way by means of at least one piezoelement. This likewise makes possible a simultaneous recording of a depth profile of the object to be optically scanned (or also a possible further focusing of the scanner arrangement 50) during the phase of the "standing image", i.e. during a scanning step.

Fig. 3 now shows a perspective exploded view of the scanner arrangement 50 in accordance with the exemplary embodiment of the invention. Parts already described in Fig. 2 are not described again.

In this illustration of the scanner arrangement 50, the minirail guides 7, which are in engagement with the minirail milled indentations for attachment purposes, are now also clearly visible. Said minirail guides 7 ensure that the objective lens carriage 8 is held at a prescribed constant distance with respect to the object stage during its movement parallel to the object stage over the object to be scanned.

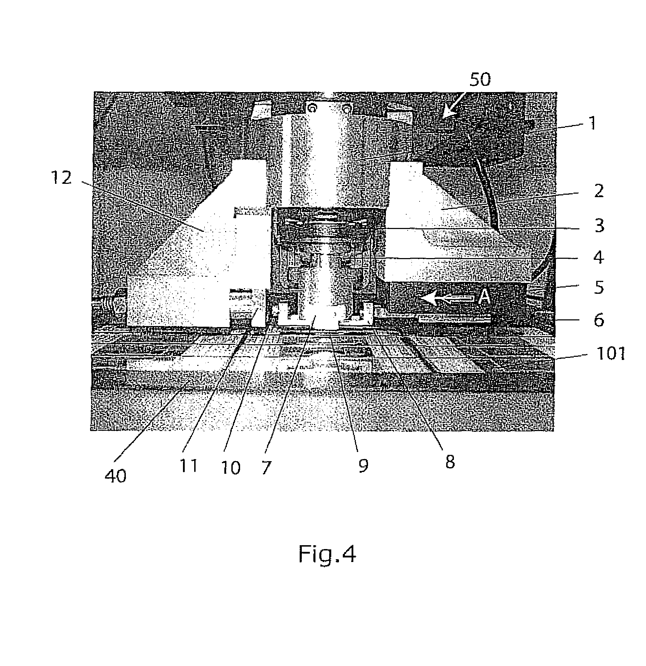

Fig. 4 shows a side view of the scanner arrangement 50 in accordance with the exemplary embodiment of the invention. Parts already described in Fig. 2 are not described again.

Besides the scanner arrangement 50, Fig. 4 also illustrates an object 101 to be scanned which is positioned on an object stage 40 for translation purposes. While the object 101 is translated continuously in the direction of arrow A by means of the object stage 40 and also during each of the scanning steps, the translation stage 5 which is driven by means of the piezoelement also translates the front objective lens in the direction of the arrow A, wherein the force of the translation stage 5 is transferred, by means of the pressure plate 6, to the objective lens carriage 8, on which finally the front objective lens to be moved is attached.

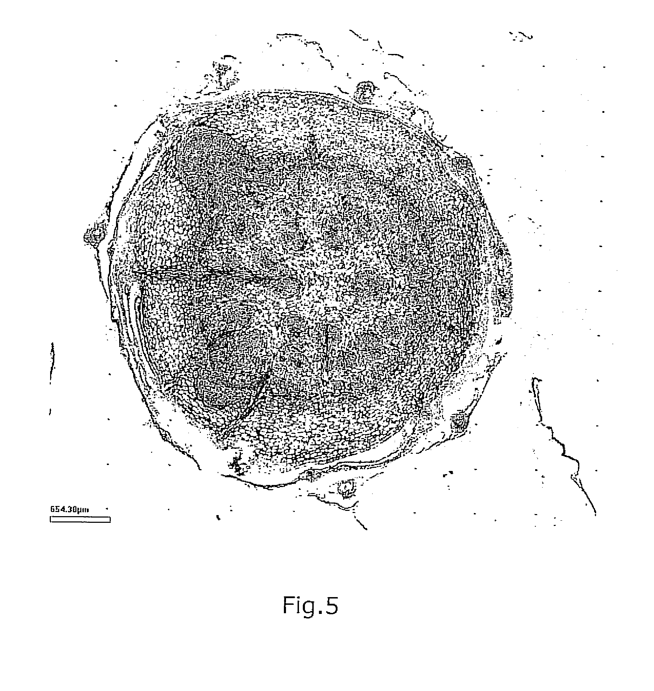

Fig. 5 finally displays a graphic representation 60 of an object, which was composed of a plurality of partial images recorded by means of the scanner arrangement 50 in accordance with the exemplary embodiment of the invention.

The cross section of a lily of the valley rhizome was used as the object in this exemplary embodiment. The scale of the graphic representation 60 (see bottom left in Fig. 5) is 654.30 µm. A resolution of between 1 µm and 2 µm could be achieved for the graphic representation 60 using the scanner arrangement 50.

Since the scanner camera used in the scanner arrangement 50 is connected to a computer for image reading, image processing and image storing purposes, it is possible to show specific areas of the graphic representation 60 shown in Fig. 5 of the optically scanned object in a manner such that they are also enlarged as desired using software.

## Claims

1. A scanner arrangement (50), in particular a scanning microscope, for optically scanning an object (101) in a sequence of scanning steps, having a driveable moving object stage (40) and an objective assembly (4, 7-10), which has a front objective lens (9, 103) on an objective lens carriage (8) which can be moved parallel to the object stage (40) by a carriage drive (5, 6, 10, 11), wherein the object stage (40) can be driven during the sequence of scanning steps in order to achieve a continuous movement and the objective lens carriage (8) with the front objective lens (9, 103) can be driven in each of the scanning steps for a forward movement step, in which the front objective lens (9, 103) is moved with the object stage (40) out of an initial position, and in each case between successive scanning steps for a backward movement into the initial position, with the object (101) being able to be optically scanned during the continuous movement of the object stage (40) **characterised in that** there is at least one scanning step in which the speed of the front objective lens is not equal to the speed of the object stage for a substantial period of time relative to the length of time taken for the at least one scanning step to be performed so that the relative motion of the front objective lens and the object stage during the at least one scanning step allows acquisition of an unblurred image.

2. The scanner arrangement (50) as claimed in claim 1, in which the speed, during the substantial period of time, of the front objective lens is constant but not equal to the speed of the object stage when the latter is in continuous motion.

3. The scanner arrangement (50) as claimed in claim 1 or claim 2, in which the scanner arrangement has a lens system with an optical axis and further has a detector to collect an image of the object during each scanning step, which lens system optically couples the front objective lens to the detector, and in which the forward movement step is within 300 µm, and preferably within 250 µm, of the optical axis of the lens system.

4. The scanner arrangement (50) as claimed in claim 1, 2 or 3, in which the carriage drive (5, 6, 10, 11) has a forward movement device (5, 6) with a piezoelement.

5. The scanner arrangement (50) as claimed in claim 1,2, 3 or 4, in which the carriage drive (5, 6, 10, 11) has a backward movement device (10, 11) with a permanent magnet.

6. The scanner arrangement (50) as claimed in claim 4, in which the piezoelement has a maximum travel in the range between 100 µm and 1 mm and in particular of 500 µm.

7. The scanner arrangement (50) as claimed in claim 4 or 6, in which the piezoelement can be operated at a frequency in the range of between 5 Hz and 200 Hz, in particular at a frequency of between 25 and 120 Hz.

8. The scanner arrangement (50) as claimed in any of claims 1 to 7, in which the front objective lens (9, 103) has a lens viewing area (102) on the object (101) and in which the objective assembly (4, 7-10) has an objective viewing area (104) on the object (101), the lens viewing area (102) being larger than the objective viewing area (104).

9. Scanner arrangement (50) as claimed in one of claims 1 to 8, having an additional piezoelement (3) which is fitted on the objective assembly (4, 1-10) such that the objective assembly (4, 7-10) can be adjusted along its optical axis such that the focus of the objective assembly (4, 7-10) can be set for recording a depth profile of the object (101).

10. A method for optically scanning an object (101) in a sequence of scanning steps by means of a scanner arrangement (50), in particular a scanning microscope, having an objective assembly (4, 7-10) with a front objective lens (9, 103), in which the scanning steps are carried out during the continuous movement of the object (101) by virtue of the fact that the front objective lens (9, 103) of the objective assembly (4, 7-10) is moved in parallel with and in the same direction as the object (101) out of an initial position during each of the scanning steps and is moved back into the initial position between the respective scanning steps **characterised in that** there is at least one scanning step in which the speed of the front objective lens is not equal to the speed of the object for a substantial period of time relative to the length of time taken for the at least one scanning step to be performed so that the relative motion of the front objective lens and the object during the at least one scanning step allows acquisition of an unblurred image.

11. The scanner arrangement (50) as claimed in claim 10, in which the speed, during the substantial period of time, of the front objective lens is constant but not equal to the speed of the object stage when the latter is in continuous motion.

12. A method for optically scanning an object (101) as claimed in claim 10 or 11, in which the scanner arrangement (50) has a lens system with an optical axis, and further has a detector to collect an image of the object during each scanning step which lens system optically couples the front objective lens to the detector, in which method the front objective lens is moved no more than 300 µm, and preferably no more than 250 µm, from the optical axis of the lens system.

13. The method as claimed in claims 10, 11 or 12, in which the front objective lens (9, 103) is concomitantly moved during the scanning steps by means of a piezoelement.

14. The method as claimed in any of claims 10, 11, 12 or 13, in which the front objective lens (9, 103) is moved backward between the scanning steps by means of a permanent magnet (10).

15. The method as claimed in any of claims 10 to 14, in which the objective assembly (4, 7-10) with objective viewing area (104) and the front objective lens (9, 103) with lens viewing area (102) used are of a type such that the objective viewing area (104) on the object (101) is larger than the lens viewing area (102) on the object (101).

16. The method as claimed in any of claims 10 to 15, in which an additional piezoelement (3) which is fitted on the objective assembly (4, 7-10) is used so that the objective assembly (4, 7-10) can be adjusted along its optical axis such that the focus of the objective assembly (4, 7-10) can be set for recording a depth profile of the object (101) during the movement of the front objective lens (9, 103) with the object (101).
